# FASCICULE DE BREVET EUROPEEN

(11) **EP 0 637 109 B1**
(45) Date de publication et mention de la délivrance du brevet: **20.11.1996**
(21) Numéro de dépôt: 94401706.0
(22) Date de dépôt: 25.07.1994
(51) Int. Cl.: H01S 3/06, G02B 6/28, G02B 6/34

(54) **Amplificateur optique à fibre optique en verre fluoré dopé et procédé de fabrication de cet amplificateur**
Optischer Faserverstärker aus dotiertem Fluoridglas und Verfahren zu seiner Herstellung
Doped fluoride glassfiber optical amplifier and method for its manufacture

(30) Priorité: 26.07.1993 FR 9309165
(43) Date de publication de la demande: 01.02.1995
(73) Titulaire: FRANCE TELECOM, 75015 Paris (FR)
(72) Inventeur: Ronarc'h, Daniel, F-22300 Lannion (FR); Guibert, Marcel, F-22300 Lannion (FR); Ibrahim, Houmed, F-22300 Lannion (FR)
(74) Mandataire: Dubois-Chabert, Guy

(56) Documents cités:
- EP-A- 0 521 763
- GB-A- 2 243 942
- IEEE PHOTONICS TECHNOLOGY LETTERS, vol.5, no.4, Avril 1993, New York, US, pp 401-403, XP000368315; T.WHITHLEY ET AL.: 'High output power from an efficient Praseodymium-doped fluoride fiber amplifier'
- IEEE PHOTONICS TECHNOLOGY LETTERS, vol.4, no.9, Septembre 1992, New York, US, pp 994-996, XP000305559; M.YAMADA ET AL.: '15.1-dB-gain Pr3+ doped fluoride fiber amplifier pumped by high-power laser-diode-modules'

## Description

La présente invention concerne un amplificateur optique à fibre optique en verre fluoré dopé et un procédé de fabrication de cet amplificateur.

Elle trouve notamment des applications dans le domaine des télécommunications par fibres optiques.

On sait qu'on peut utiliser des amplificateurs optiques à fibre dopée par une terre rare pour réaliser des systèmes de télécommunication, tant en transmission qu'en distribution.

C'est l'amplificateur optique à fibre de silice dopée par l'erbium qui a été le plus étudié.

Depuis peu, des études ont montré que d'autres verres que la silice pouvaient donner des fibres optiques de bonne qualité et que ces fibres pouvaient également être dopées par des terres rares.

Des fibres en verre fluoré, le ZBLAN par exemple, sont à présent commercialement disponibles et il a été démontré que le dopage du coeur de telles fibres par l'erbium (respectivement le praséodyme) permettait d'amplifier un rayonnement dont la longueur d'onde est voisine de 1,5 µm (respectivement 1,3 µm).

Pour des longueurs d'onde voisines de 1,5 µm, de telles fibres dopées par l'erbium permettent de réaliser un amplificateur optique dont le gain, en fonction de la longueur d'onde, est quasiment constant de façon naturelle, ce qui n'est pas le cas pour un amplificateur à fibre de silice dopée par l'erbium.

Cette propriété est intéressante pour transmettre un multiplex de longueurs d'onde et plusieurs méthodes ont été proposées pour "aplatir" le spectre de gain des amplificateurs réalisés à l'aide de fibres de silice dopée.

En fait, l'utilisation de fibres en verre fluoré dopé par l'erbium est la solution la plus simple pour réaliser des amplificateurs optiques à gain spectral plat.

De plus, des résultats récents ont montré que des rendements de pompage équivalents aux rendements de pompage de la silice dopée par des ions Er³⁺ pouvaient être atteints avec de telles fibres en verre fluoré dopé par l'erbium.

Pour des longueurs d'onde voisines de 1,3 µm, le seul amplificateur optique à fibre qui puisse convenablement fonctionner actuellement est un amplificateur à fibre en verre fluoré dopé par le praséodyme.

Dans les systèmes de télécommunication, ces amplificateurs à base de fibres en verre fluoré doivent s'insérer entre deux extrémités de fibres optiques en silice et il est important que l'entrée et la sortie de ces amplificateurs soient câblées en fibres optiques de silice standard (recommandation CCITT G652).

Ceci pose le problème de la jonction des fibres de silice et des fibres en verre fluoré.

Il n'est pas possible de souder par fusion une fibre en verre fluoré (dopé ou non dopé) avec une fibre en silice, du fait que leurs températures de fusion sont très différentes l'une de l'autre.

En conséquence, il n'est pas possible d'utiliser les techniques de fabrication des amplificateurs optiques à base de silice pour réaliser un amplificateur optique à fibre en verre fluoré dopé.

Pour résoudre ce problème, une solution connue consiste à joindre une fibre en verre fluoré et une fibre de silice standard au moyen d'un connecteur par exemple du genre du système OPTABALL (marque déposée) commercialisé par la société Radial, dont on peut ajuster les pertes en dynamique.

On peut ainsi réaliser un amplificateur optique comprenant une fibre optique en verre fluoré dopé, qui est reliée, d'un côté, à une fibre de silice par l'intermédiaire d'un tel connecteur (connecteur d'entrée) et, de l'autre côté, à une autre fibre de silice par un connecteur du même type (connecteur de sortie).

Cependant, la diminution de la taille du mode optique dans la fibre en verre fluoré dopé, nécessaire pour avoir une efficacité de pompage aussi grande que possible, engendre des pertes intolérables à l'injection du rayonnement de pompage et du signal à amplifier, à travers le connecteur d'entrée, et à l'extraction du signal amplifié, à travers le connecteur de sortie de la fibre en verre fluoré dopé.

L'adaptation du diamètre de mode optique entre la fibre en silice standard et la fibre en verre fluoré dopé peut être améliorée en utilisant une fibre de silice intermédiaire ayant le même diamètre de mode que la fibre en verre fluoré dopé, cette fibre intermédiaire étant soudée par fusion à la fibre standard d'un côté et collée à la fibre en verre fluoré dopé de l'autre côté.

IEEE Photonics Technology Letters, vol. 5, no. 4, Avril 1993, pages 401-403, décrit un amplificateur comprenant un multiplexeur en silice, une fibre intermédiaire en silice et une fibre en verre fluoré dopé qui est couplée par "butt-joint" à la fibre intermédiaire.

La soudure par fusion des deux fibres de silice donne des pertes typiquement inférieures à 0,3 dB tandis que le collage de la fibre de silice à la fibre en verre fluoré dopé s'effectue avec des pertes typiquement inférieures à 0,4 dB.

Du fait des pertes optiques induites par ce collage (nécessité par la différence de nature des deux verres constituant les fibres) l'efficacité de pompage d'un amplificateur à fibre en verre fluoré dopé sera toujours inférieure à celle d'un amplificateur à fibre en silice dopée comparable.

De plus, la fiabilité du collage qui est traversé par une puissance optique importante n'est pas garantie.

La présente invention a pour but de remédier à ces inconvénients en proposant un amplificateur optique à fibre optique en verre fluoré dopé et un procédé de fabrication de cet amplificateur qui permettent à la fois de minimiser les pertes de couplage à la fibre en verre fluoré dopé, d'éviter les problèmes dus au collage qui ont été mentionnés plus haut et d'avoir une entrée et une sortie de l'amplificateur optique réalisées en fibres optiques de silice standard.

De façon précise, la présente invention a tout d'abord pour objet un amplificateur optique comprenant une fibre optique en verre fluoré dopé de façon à pouvoir amplifier un signal lumineux lorsqu'un rayonnement de pompage est injecté dans la fibre, cet amplificateur étant caractérisé en ce qu'il comprend en outre :
- un multiplexeur optique de type 2 vers 1 qui comporte, d'une part, deux fibres optiques de silice et, d'autre part, une fibre optique en verre fluoré dont au moins un tronçon est dopé de façon à constituer ladite fibre en verre fluoré dopé, ce multiplexeur étant prévu pour adapter le diamètre de mode des fibres de silice au diamètre de mode de la fibre en verre fluoré qu'il comporte,
- au moins une autre fibre optique en silice, et
- un moyen de couplage optique entre cette dernière et la fibre en verre fluoré, ce moyen de couplage étant prévu pour adapter le diamètre de mode de cette autre fibre en silice au diamètre de mode de la fibre en verre fluoré,
le signal lumineux passant d'une fibre en silice située d'un côté de l'amplificateur à une fibre en silice située de l'autre côté de celui-ci, tandis que le rayonnement de pompage est injecté par au moins une fibre en silice de l'amplificateur, distincte de ces dernières fibres en silice.

Bien entendu, par "fibre optique en verre fluoré dopé de façon à pouvoir amplifier un signal lumineux", on entend une fibre optique dont le coeur est fait d'un verre fluoré convenablement dopé pour constituer un milieu amplificateur vis-à-vis du signal.

Pour ce faire, ce coeur en verre fluoré est par exemple dopé par des ions d'erbium ou de praséodyme.

Selon un mode de réalisation préféré de l'amplificateur objet de l'invention, le moyen de couplage optique est un autre multiplexeur optique de type 2 vers 1 qui comporte, d'une part, deux fibres optiques en silice et, d'autre part, la fibre en verre fluoré.

On obtient ainsi un amplificateur optique à structure symétrique, avec entrées et sorties sur fibres de silice.

Le coeur dudit tronçon de fibre optique peut être dopé par des ions d'au moins une terre rare.

Selon un mode de réalisation particulier de l'amplificateur objet de l'invention, la fibre optique en verre fluoré est dopée sur toute sa longueur.

Selon un autre mode de réalisation particulier de l'amplificateur objet de l'invention, la fibre optique en verre fluoré comprend un tronçon de fibre optique en verre fluoré dopé de façon à pouvoir amplifier le signal lumineux et, des deux côtés de ce tronçon, deux autres tronçons de fibre optique en verre fluoré non dopé.

La présente invention a également pour objet un procédé de fabrication d'un amplificateur optique comprenant une fibre optique en verre fluoré dopé de façon à pouvoir amplifier un signal lumineux lorsqu'un rayonnement de pompage est injecté dans la fibre, ce procédé étant caractérisé en ce qu'il comprend les étapes suivantes :
- on fabrique un multiplexeur optique de type 2 vers 1 qui comporte, d'une part, deux fibres optiques de silice et, d'autre part, une fibre optique en verre fluoré dont au moins un tronçon est dopé de façon à constituer ladite fibre en verre fluoré dopé, ce multiplexeur étant prévu pour adapter le diamètre de mode des fibres de silice au diamètre de mode de la fibre en verre fluoré qu'il comporte, et
- on réalise un couplage optique entre la fibre en verre fluoré et au moins une autre fibre optique en silice, ce couplage étant réalisé de manière à adapter le diamètre de mode de cette autre fibre en silice au diamètre de mode de la fibre en verre fluoré.

Selon un mode de mise en oeuvre préféré du procédé objet de l'invention, on soude une fibre optique de silice standard à chacune desdites fibres optiques de silice et une autre fibre optique de silice standard à ladite autre fibre optique de silice, le diamètre de mode de la fibre optique en verre fluoré étant égal au diamètre de mode desdites fibres optiques de silice et de ladite autre fibre optique de silice et inférieur au diamètre de mode des fibres de silice standard.

De préférence, les extrémités de la fibre en verre fluoré sont polies perpendiculairement ou obliquement à son axe.

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un mode de réalisation particulier de l'amplificateur optique objet de l'invention, comprenant deux multiplexeurs optiques reliés par une fibre optique en verre fluoré dopé par des ions d'une terre rare,
- la figure 2 est une vue schématique d'un autre mode de réalisation particulier dans lequel les deux multiplexeurs sont reliés par une fibre optique en verre fluoré comportant un tronçon central en verre fluoré dopé par ces ions et, de part et d'autre de celui-ci, des tronçons de fibre optique en verre fluoré non dopé qui sont soudés par fusion au tronçon central,
- la figure 3 illustre schématiquement la possibilité de réaliser un pompage contra-directionnel avec un amplificateur du genre de celui qui est représenté sur la figure 1, et
- la figure 4 illustre schématiquement la possibilité de réaliser un pompage contra-directionnel et un pompage co-directionnel avec un amplificateur du genre de celui qui est représenté sur la figure 1.

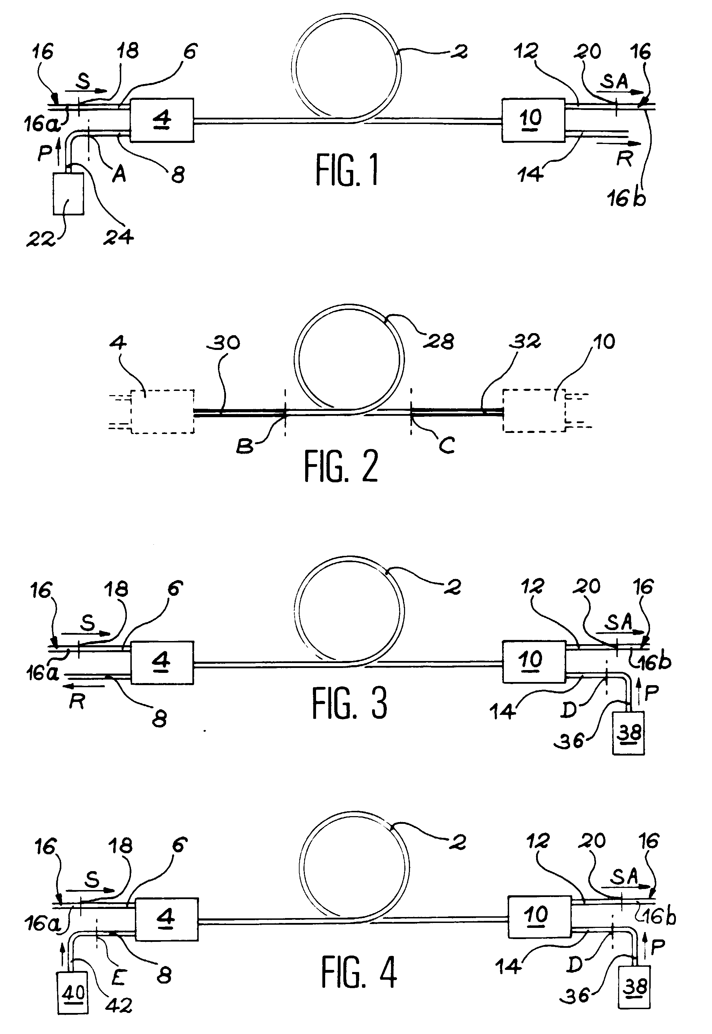

L'amplificateur conforme à l'invention, qui est schématiquement représenté sur la figure 1, comprend :
- une fibre optique 2 en verre fluoré, dont le coeur est dopé par des ions d'une terre rare,
- un premier multiplexeur optique 4, de type "2 vers 1", comprenant deux fibres optiques d'entrée 6 et 8, constituées par des fibres optiques de silice, et une fibre optique de sortie constituée par la fibre optique 2 (dont une extrémité est ainsi montée dans le multiplexeur 4), et
- un deuxième multiplexeur optique 10, de type "2 vers 1", comprenant une fibre optique d'entrée constituée également par la fibre optique 2 (dont l'autre extrémité est ainsi montée dans ce multiplexeur 10) et deux fibres optiques de sortie 12 et 14, constituées par des fibres optiques de silice.

Dans l'exemple représenté sur la figure 1, l'amplificateur optique conforme à l'invention est inséré dans une ligne optique constituée par une fibre optique 16 en silice standard dans laquelle se propage un signal optique S.

La fibre optique 16 est interrompue pour l'insertion de cet amplificateur optique.

Une partie 16a de la fibre 16 est optiquement couplée à la fibre optique 6 de cet amplificateur par une soudure par fusion 18 et l'autre partie 16b de cette fibre optique 16 est optiquement couplée à la fibre optique 12 de l'amplificateur par une soudure par fusion 20.

On munit également l'amplificateur optique de la figure 1 d'un laser de pompage 22 comportant une fibre optique de sortie en silice standard 24 et cette dernière est soudée par fusion à la fibre optique 8 au point A.

Les fibres 2, 6, 8, 12 et 14 sont monomodes et ont le même diamètre de mode et ce dernier est inférieur au diamètre de mode des fibres 16 et 24 (également monomodes).

Les soudures 18 et 20 et les soudures en A et B sont réalisées de façon à conduire à des pertes inférieures à 0,3 dB.

Le signal optique SA, résultant de l'amplification du signal S par l'amplificateur de la figure 1, sort de ce dernier par la fibre 12 pour se propager dans la fibre 16.

Dans l'exemple de la figure 1, le pompage optique est co-directionnel (le rayonnement de pompage P fourni par le laser 22 se propage dans le même sens que le signal S).

Le rayonnement de pompage résiduel R est transmis par la fibre optique 14.

Pour réaliser l'amplificateur optique de la figure 1, il convient de fabriquer les deux multiplexeurs optiques 4 et 10.

Ceci est réalisable par l'homme du métier (il existe des fabricants, par exemple la Société J.D.S., de multiplexeurs optiques à lentilles de silice, de type "2 vers 1", à deux fibres d'entrée standard en silice et une fibre de sortie standard également en silice, et il suffit de modifier la fabrication de tels multiplexeurs en montant une fibre de sortie en verre fluoré dopé et en montant des fibres d'entrée en silice de même diamètre de mode que cette fibre de sortie.

L'extrémité de la fibre de sortie placée dans ce multiplexeur est polie perpendiculairement ou obliquement à son axe.

On commence ainsi par fabriquer le multiplexeur 4 muni des fibres 6 et 8 et de la fibre 2.

La transition "silice-verre fluoré" se fait donc par l'intermédiaire des lentilles du multiplexeur 4.

Dans une variante de réalisation qui est schématiquement illustrée par la figure 2, on fabrique le multiplexeur optique 4 avec une fibre monomode de sortie 30 en verre fluoré non dopé.

De la même façon, on fabrique le multiplexeur optique 10 avec une fibre optique monomode d'entrée 32 en verre fluoré non dopé et l'on soude par fusion les extrémités libres des fibres 30 et 32 respectivement aux extrémités d'un tronçon de fibre optique monomode 28 en verre fluoré dopé par une terre rare (les points de raccordement portant respectivement les références B et C sur la figure 2).

On précise que, dans le cas de la figure 2, les fibres 6, 8, 12, 14, 30 et 32 ont le même diamètre de mode que les fibres de silice standard 16 et 24 et que la fibre 28 a un diamètre de mode inférieur.

Ceci facilite le montage des multiplexeurs 4 et 10.

En revenant à la fabrication de l'amplificateur de la figure 1, lorsque le multiplexeur optique 4 est réalisé, on détermine la longueur optimale de la fibre amplificatrice (fibre en verre fluoré dopé).

Cette détermination est réalisée par examen de l'émission spontanée amplifiée à l'aide d'un analyseur de spectre optique.

Ensuite, on monte le multiplexeur 10 (identique au multiplexeur 4) à l'extrémité libre de la fibre optique 2, cette fibre 2 entrant ainsi dans le multiplexeur 10.

L'extrémité de cette fibre 2 qui se trouve dans ce multiplexeur 10 est polie perpendiculairement ou obliquement à son axe optique.

Comme précédemment, la transition "verre fluoré-silice" se fait ici par l'intermédiaire des lentilles (non représentées) que comporte le multiplexeur 10.

L'amplificateur optique conforme à l'invention, qui est représenté sur la figure 1, a une structure symétrique.

De plus, l'amplificateur de la figure 1 permet avantageusement le filtrage du rayonnement résiduel de pompage R à la sortie de cet amplificateur, grâce au filtre optique (non représenté) que comporte le multiplexeur 10.

Il est ainsi possible de surveiller le fonctionnement du laser de pompage 22 en montant des moyens de surveillance appropriés (non représentés) à la sortie de la fibre optique 14.

La structure de l'amplificateur représenté sur la figure 1 permet également d'utiliser un pompage contra-directionnel comme le montre schématiquement la figure 3.

Sur cette dernière, on voit un amplificateur optique identique à celui qui est représenté sur la figure 1 à ceci près que l'extrémité libre de la fibre 14 est soudée par fusion, au point D, à la fibre optique monomode de sortie 36 d'un laser de pompage 38, cette fibre 36 étant une fibre en silice standard.

De plus, dans le cas de la figure 3, l'extrémité libre de la fibre 8 n'est plus reliée à un laser de pompage.

On réalise alors un pompage contra-directionnel et le rayonnement de pompage résiduel R se propage dans la fibre optique 8.

Dans la variante de réalisation de la figure 4, les fibres 8 et 14 sont respectivement couplées à des lasers de pompage 40 et 38 pour réaliser à la fois un pompage co-directionnel et un pompage contra-directionnel.

Le laser 40 comporte une fibre monomode de sortie standard en silice 42 qui est soudée à la fibre 8 par fusion au point E.

Dans une variante de réalisation de l'amplificateur représenté sur la figure 1, on fabrique le multiplexeur 10 sans filtre optique ni fibre optique 14, ce qui revient à fabriquer simplement une transition verre fluoré-silice.

## Revendications

1. Amplificateur optique comprenant une fibre optique en verre fluoré dopé de façon à pouvoir amplifier un signal lumineux (S) lorsqu'un rayonnement de pompage (P) est injecté dans la fibre, cet amplificateur étant caractérisé en ce qu'il comprend en outre :
- un multiplexeur optique (4) de type 2 vers 1 qui comporte, d'une part, deux fibre optiques de silice (6, 8) et, d'autre part, une fibre optique en verre fluoré (2, 30-28-32) dont au moins un tronçon est dopé de façon à constituer ladite fibre en verre fluoré dopé, ce multiplexeur étant prévu pour adapter le diamètre de mode des fibres de silice au diamètre de mode de la fibre en verre fluoré qu'il comporte,
- au moins une autre fibre optique en silice (12, 14), et
- un moyen (10) de couplage optique entre cette dernière et la fibre en verre fluoré, ce moyen de couplage étant prévu pour adapter le diamètre de mode de cette autre fibre en silice au diamètre de mode de la fibre en verre fluoré,
le signal lumineux (S) passant d'une fibre en silice située d'un côté de l'amplificateur à une fibre en silice située de l'autre côté de celui-ci, tandis que le rayonnement de pompage (P) est injecté par au moins une fibre en silice de l'amplificateur, distincte de ces dernières fibres en silice.

2. Amplificateur selon la revendication 1, caractérisé en ce que le moyen de couplage optique est un autre multiplexeur optique (10) de type 2 vers 1 qui comporte, d'une part, deux fibres optiques en silice (12, 14) et, d'autre part, la fibre en verre fluoré (2, 30-28-32).

3. Amplificateur selon l'une quelconque des revendications 1 et 2, caractérisé en ce que le coeur dudit tronçon est dopé par des ions d'au moins une Terre Rare.

4. Amplificateur selon l'une quelconque des revendications 1 à 3, caractérisé en ce que la fibre optique en verre fluoré (2) est dopée sur toute sa longueur.

5. Amplificateur selon l'une quelconque des revendications 1 à 3, caractérisé en ce que la fibre optique en verre fluoré comprend un tronçon (28) de fibre optique en verre fluoré dopé de façon à pouvoir amplifier le signal lumineux et, des deux côtés de ce tronçon, deux autres tronçons de fibre optique (30, 32) en verre fluoré non dopé.

6. Procédé de fabrication d'un amplificateur optique comprenant une fibre optique en verre fluoré dopé de façon à pouvoir amplifier un signal lumineux (S) lorsqu'un rayonnement de pompage (P) est injecté dans la fibre, ce procédé étant caractérisé en ce qu'il comprend les étapes suivantes :
- on fabrique un multiplexeur optique (4) de type 2 vers 1 qui comporte, d'une part, deux fibres optiques de silice (6, 8) et, d'autre part, une fibre optique en verre fluoré (2, 30-28-32) dont au moins un tronçon est dopé de façon à constituer ladite fibre en verre fluoré dopé, ce multiplexeur étant prévu pour adapter le diamètre de mode des fibres de silice au diamètre de mode de la fibre en verre fluoré qu'il comporte, et
- on réalise un couplage optique entre la fibre en verre fluoré (2, 30-28-32) et au moins une autre fibre optique en silice (12, 14), ce couplage étant réalisé de manière à adapter le diamètre de mode de cette autre fibre en silice au diamètre de mode de la fibre en verre fluoré.

7. Procédé selon la revendication 6, caractérisé en ce que l'on soude une fibre optique de silice standard à chacune desdites fibres optiques de silice et une autre fibre optique de silice standard à ladite autre fibre optique de silice, le diamètre de mode de la fibre optique en verre fluoré étant égal au diamètre de mode desdites fibres optiques de silice et de ladite autre fibre optique de silice et inférieur au diamètre de mode des fibres de silice standard.

8. Procédé selon l'une quelconque des revendications 6 et 7, caractérisé en ce que les extrémités de la fibre en verre fluoré sont polies perpendiculairement ou obliquement à son axe.

## Patentansprüche

1. Optischer Verstärker, welcher eine optische Faser aus Fluoridglas aufweist, das derartig dotiert ist, um ein Lichtsignal (S) verstärken zu können, wenn eine Pumpstrahlung (P) in die Faser eingespeist wird, wobei der Verstärker dadurch gekennzeichnet ist, daß er darüberhinaus noch aufweist:
- einen optischen Multiplexer (4) vom Typ 2 zu 1, der einerseits zwei optische Siliciumdioxidfasern (6, 8) und andererseits eine optische Faser aus Fluoridglas (2, 30-28-32) aufweist, bei der wenigstens ein Teilabschnitt derartig dotiert ist, um die Faser aus dotiertem Fluoridglas zu bilden, wobei der Multiplexer dazu vorgesehen ist, den Modendurchmesser der Siliciumdioxidfasern an den Modendurchmesser der Faser aus Fluoridglas anzupassen, die der Multiplexer aufweist,
- wenigstens eine weitere optische Faser aus Siliciumdioxid (12, 14), und
- eine Einrichtung (10) zur optischen Kopplung zwischen dieser letzteren und der Faser aus Fluoridglas, wobei die Einrichtung zur Kopplung dazu vorgesehen ist, den Modendurchmesser dieser weiteren Faser aus Siliciumdioxid an den Modendurchmesser der Faser aus Fluoridglas anzupassen, wobei das Lichtsignal (S) von einer Faser aus Siliciumdioxid, welche an einer Seite des Verstärkers angeordnet ist, zu einer Faser aus Siliciumdioxid läuft, welche an der anderen Seite des Verstärkers angeordnet ist, während die Pumpstrahlung (P) durch wenigstens eine Faser aus Siliciumdioxid des Verstärkers eingespeist wird, welche von diesen letzteren Fasern aus Siliciumdioxid verschieden ist.

2. Verstärker nach Anspruch 1, dadurch gekennzeichnet, daß das Mittel zur optischen Kopplung ein weiterer optischer Multiplexer (10) vom Typ 2 zu 1 ist, der einerseits zwei optische Fasern aus Siliciumdioxid (12, 14) und andererseits die Faser aus Fluoridglas (2, 30-28-32) aufweist.

3. Verstärker nach einem der Ansprüche 1 und 2, dadurch gekennzeichnet, daß der Kern des Teilabschnitts mit Ionen von wenigstens einer Seltenen Erde dotiert ist.

4. Verstärker nach einem der Ansprüche 1 bis 3, dadurch gekennzeichnet, daß die optische Faser aus Fluoridglas (2) auf ihrer gesamten Länge dotiert ist.

5. Verstärker nach einem der Ansprüche 1 bis 3, dadurch gekennzeichnet, daß die optische Faser aus Fluoridglas einen Teilabschnitt (28) der optischen Faser aus Fluoridglas, welches derartig dotiert ist, um das Lichtsignal verstärken zu können, und auf beiden Seiten des Teilabschnitts zwei weitere Teilabschnitte der optischen Faser (30, 32) aus nicht dotierten Fluoridglas aufweist.

6. Verfahren zur Herstellung eines optischen Verstärkers, welcher eine optische Faser aus Fluoridglas aufweist, das derartig dotiert ist, um ein Lichtsignal (S) verstärken zu können, wenn eine Pumpstrahlung (P) in die Faser eingespeist wird, wobei das Verfahren dadurch gekennzeichnet ist, daß es die folgenden Schritte aufweist:
- Herstellen eines optischen Multiplexers (4) vom Typ 2 zu 1, welcher einerseits zwei optische Siliciumdioxidfasern (6, 8) und andererseits eine optische Faser aus Fluoridglas (2, 30-28-32) aufweist, bei der wenigstens ein Teilabschnitt derartig dotiert ist, um die Faser aus dotiertem Fluoridglas zu bilden, wobei der Multiplexer dazu vorgesehen ist, den Modendurchmesser der Siliciumdioxidfasern an den Modendurchmesser der Faser aus Fluoridglas anzupassen, die der Multiplexer aufweist, und
- Ausführen einer optischen Kopplung zwischen der Faser aus Fluoridglas (2, 30-28-32) und wenigstens einer weiteren optischen Faser aus Siliciumdioxid (12, 14), wobei die Kopplung derartig ausgeführt wird, um den Modendurchmesser dieser weiteren Faser aus Siliciumdioxid an den Modendurchmesser der Faser aus Fluoridglas anzupassen.

7. Verfahren nach Anspruch 6, dadurch gekennzeichnet, daß eine optische Standard-Siliciumdioxidfaser mit jeder der optischen Siliciumdioxidfasern und eine weitere optische Standard-Siliciumdioxidfaser mit der weiteren optischen Siliciumdioxidfaser verschweißt werden, wobei der Modendurchmesser der optischen Faser aus Fluoridglas gleich dem Modendurchmesser der optischen Siliciumdioxidfasern und der weiteren optischen Siliciumdioxidfaser und geringer als der Modendurchmesser der Standard-Siliciumdioxidfasern ist.

8. Verfahren nach einem der Ansprüche 6 und 7, dadurch gekennzeichnet, daß die Enden der Faser aus Fluoridglas senkrecht oder schief zu ihrer Achse geschliffen werden.

## Claims

1. Optical fibre incorporating a fluoride glass optical fibre doped in such a way as to be able to amplify a light signal (S) when a pumping radiation (P) is injected into the fibre, said amplifier being characterized in that it also comprises:
- a 2 to 1-type optical multiplexer (4) having on the one hand two silica optical fibres (6, 8) and on the other a single fluoride glass optical fibre (2, 30-28-32),
whereof at least one section is doped in such a way as to constitute said doped fluoride glass fibre, said multiplexer adapting the mode diameter of the silica fibres to the mode diameter of its fluoride glass fibre,
- at least one other silica optical fibre (12, 14) and
- an optical coupling means (10) between the latter and the fluoride glass fibre, said coupling means serving to adapt the mode diameter of said other silica fibre to the mode diameter of the fluoride glass fibre, the light signal (S) passing from a silica fibre located on one side of the amplifier to a silica fibre located on the other side thereof, whilst the pumping radiation (P) is injected by at least one silica fibre of the amplifier, which is not said latter silica fibres.

2. Amplifier according to claim 1, characterized in that the optical coupling means is another 2 to 1-type optical multiplexer (10) having on the one hand two silica optical fibres (12, 14) and on the other the fluoride glass fibre (2, 30-28-32).

3. Amplifier according to either of the claims 1 and 2, characterized in that the core of said section is doped by ions of at least one rare earth.

4. Amplifier according to any one of the claims 1 to 3, characterized in that the fluoride glass optical fibre (2) is doped over its entire length.

5. Amplifier according to any one of the claims 1 to 3, characterized in that the fluoride glass optical fibre comprises a fluoride glass optical fibre section (28) doped in such a way as to be able to amplify the light signal and, on two sides of said section, two other undoped, fluoride glass optical fibre sections (30, 32).

6. Process for the production of an optical amplifier incorporating a fluoride glass optical fibre doped so as to be able to amplify a light signal (S) when a pumping radiation (P) is injected into the fibre, said process being characterized in that it comprises the following stages:
- a 2 to 1 optical multiplexer (4) is produced having on the one hand two silica optical fibres (6, 8) and on the other a fluoride glass optical fibre (2, 30-28-32), whereof at least one section is doped so as to constitute said doped fluoride glass fibre, said multiplexer serving to adapt the mode diameter of the silica fibres to the mode diameter of its fluoride glass fibre and
- an optical coupling is brought about between the fluoride glass fibre (2, 30-28-32) and at least one other silica optical fibre (12, 14), said coupling being carried out in such a way as to adapt the mode diameter of said other silica fibre to the mode diameter of the fluoride glass fibre.

7. Process according to claim 6, characterized in that a standard silica optical fibre is welded to each of said silica optical fibres and another standard silica optical fibre is welded to said other silica optical fibre, the mode diameter of the fluoride glass optical fibre being equal to the mode diameter of said silica optical fibres and said other silica optical fibre and smaller than the mode diameter of the standard silica fibres.

8. Process according to either of the claims 6 and 7, characterized in that the ends of the fluoride glass fibre are polished perpendicularly or obliquely to its axis.
